# EUROPÄISCHE PATENTSCHRIFT

(11) **EP 0 623 404 B1**
(45) Veröffentlichungstag und Bekanntmachung des Hinweises auf die Patenterteilung: **13.10.1999**
(21) Anmeldenummer: 94105651.7
(22) Anmeldetag: 13.04.1994
(51) Int. Cl.: B21D 15/06, B25B 1/24, B25B 5/14

(54) **Rohr, Rohrverbindung und Verfahren zur Herstellung von Rohren für Rohrverbindungen sowie Vorrichtung zum Halten von Rohren**
Pipe, pipe connector, method for their manufacture and device for holding pipes
Tuyau, raccord de tuyau, procédé pour leur fabrication et dispositif de retenue de tuyaux

(30) Priorität: 26.04.1993 DE 4313563; 17.12.1993 DE 4343137
(43) Veröffentlichungstag der Anmeldung: 09.11.1994
(73) Patentinhaber: ROBERT BOSCH GMBH, 70442 Stuttgart (DE)
(72) Erfinder: Ehrle, Heinz, D-73249 Wernau (DE); Mejzlik, Johann, D-73257 Köngen (DE); Reitstaetter, Josef, Dipl.-Ing., D-73274 Notzingen (DE); Lenckner, Hans-Ulrich, Dipl.-Ing., D-70437 Stuttgart (DE)

(56) Entgegenhaltungen:
- EP-A- 0 302 039
- DE-C- 440 840
- DE-U- 8 619 356
- GB-A- 323 058
- GB-A- 363 574
- US-A- 3 769 678
- US-A- 3 866 457

## Beschreibung

Die Erfindung betrifft die Verwendung einer Vorrichtung zum Halten von Rohren gemäß Oberbegriff von Anspruch 1 (siehe US-A- 3769678).

### Vorteile der Erfindung

Rohre, bei denen die Rohrbunde durch gestauchte, aneinander anliegende Rohrbereiche ausgebildet sind, zeichnen sich insbesondere durch einen niedrigen Preis aus. Ferner sind Rohrbundhöhe und -abstand nur von den vom Werkstoff vorgegebenen Festigkeitskonstanten abhängig. Die Rohre bzw. die Rohrbunde können einfach und kostengünstig an die benötigten Rohrverbindungen anpaßt werden.

Beim Anformen von Rohrbunden war es bisher notwendig, das Rohr kraftschlüssig oder bei bereits gebogenem weiteren Rohrverlauf dieses Rohr formabhängig mit entsprechenden auf den Einzelfall angepaßten Haltebacken aufzunehmen. Durch die vorgeschlagene Verwendung einer Vorrichtung zum Halten von Rohren ist es möglich, die Anzahl der benötigten Haltebacken, die bisher abhängig vom Rohrdurchmesser und vom Rohrverlauf war, erheblich zu verringern, da nur noch pro Rohrdurchmesser ein Paar Haltebacken benötigt wird. Ferner wird durch die Ausgestaltung der Haltebacken erreicht, daß sich das Rohr beim Anformen der Rohrbunde beziehungsweise beim Einpressen eines profilierten Dornes lediglich um einen vorbestimmbaren Schlupf innerhalb der Haltebacken setzt. Dadurch wird es möglich, das Rohr in seiner unbearbeiteten länge so zu bemessen, daß nach seinem Bearbeiten eine Nacharbeit, insbesondere ein Ablängen entfällt und eine Reduzierung der Kosten und des Abfalls erzielt wird.

Weisen die Haltebacken eine Vielzahl von Zähnen auf, mit steilen insbesondere senkrechten Zahnflanken, so ergeben sich viele kleine Kanten, an denen sich das Rohr während der nachfolgenden Bearbeitung abstützen kann.

Vorzugsweise stehen die Zähne eines Haltebackens den Zahngründen des anderen Haltebackens gegenüber, beziehungsweise greifen die Zähne der Haltebacken kammartig ineinander. Dadurch werden an den den Zähnen gegenüberliegenden Seiten der Rohrwandung kleine Buckel gebildet, aufgrund derer ein besserer Formschluß zwischen Haltebacken und Rohr möglich ist. Die Ausbildung dieser Buckel wird durch entsprechende Freiräume zwischen den Zähnen eines Haltebackens begünstigt.

### Zeichnungen

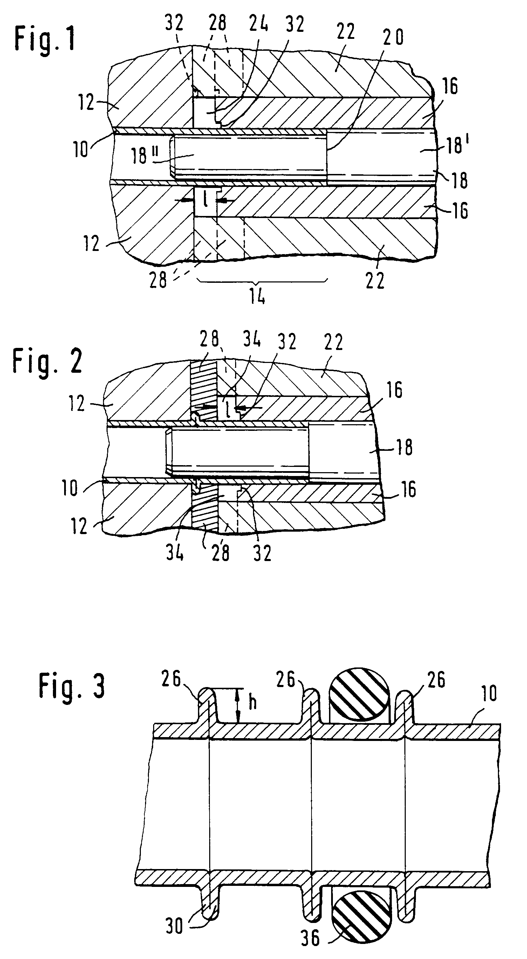

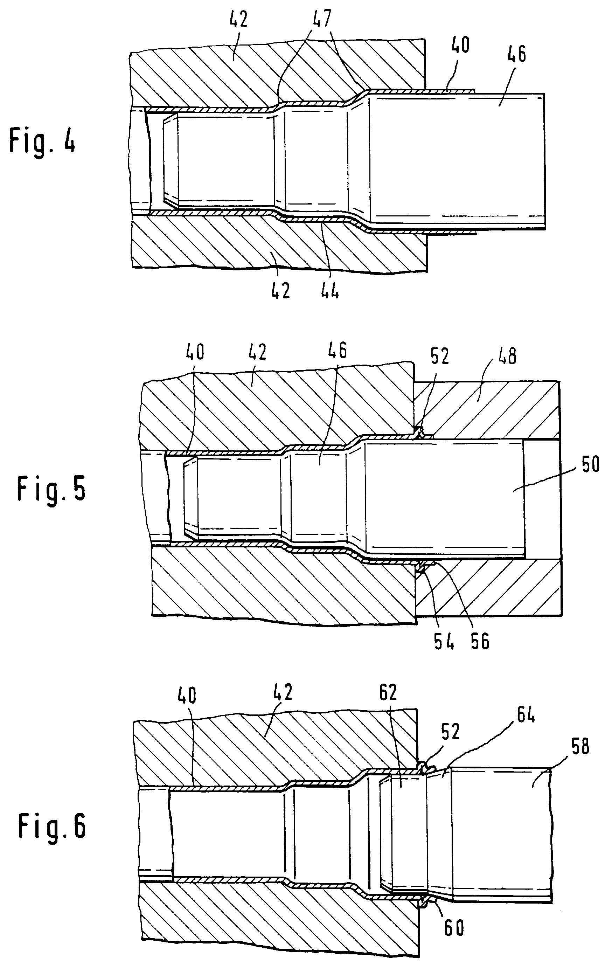

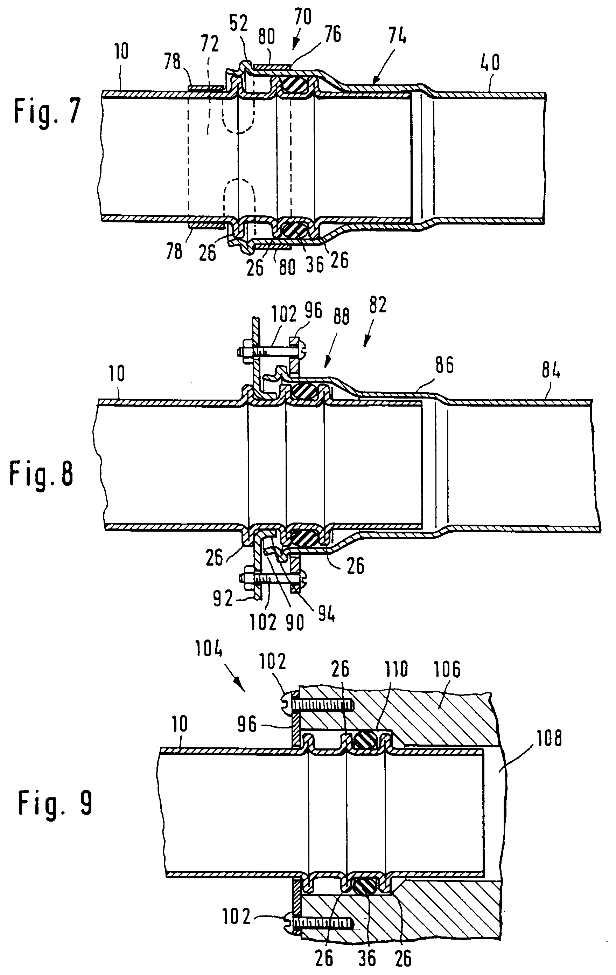

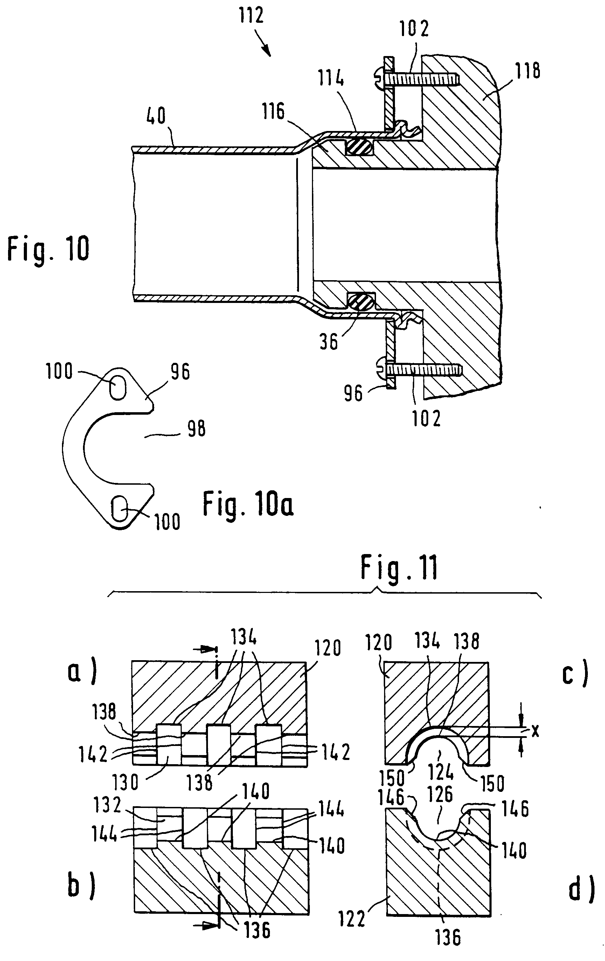

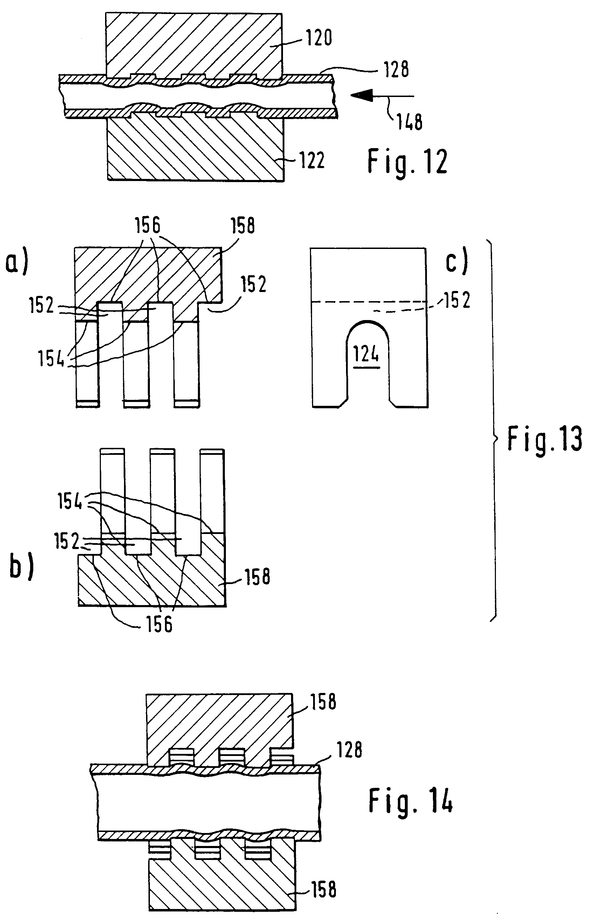

In den Zeichnungen sind die Herstellung von Rohren für Rohrverbindungen, Rohre und Rohrverbindungen sowie Haltevorrichtungen für Rohre dargestellt und in der nachfolgenden Beschreibung näher erläutert. Es zeigen die Figuren 1 und 2 je einen Verfahrensschritt während der Herstellung von Rohrbunden, Figur 3 ein Rohr, Figuren 4 bis 6 die Herstellung eines aufgeweiteten Rohres mit Rohrbund, Figuren 7 und 8 eine Rohrverbindung, Figuren 9 und 10 eine einseitige Rohrverbindung, Figur 10a ein Detail aus Figur 10, Figur 11a bis d sowie Figur 12 eine erste Haltevorrichtung und Figur 13a und b sowie Figur 14 eine zweite Haltevorrichtung. Figuren 11 bis 14 betreffen Ausführungsbeispiele der Erfindung, wogegen Figuren 1 bis 10 nur den technischen Hintergrund offenbaren, der nicht beansprucht wird.

In Figur 1 ist ein Rohr 10 im Schnitt zu sehen, das von einer ersten Haltevorrichtung 12 am äußeren Umfang fest eingespannt gehalten ist. Das Rohr 10 steht dabei ein Stück weit aus der ersten Haltevorrichtung 12 hervor. Um dieses Rohrstück 14 schmiegt sich eine zweite Haltevorrichtung 16, die mit einem Dorn 18 fest verbunden ist.

Der Dorn 18 weist einen hinteren Teil 18', dessen Außendurchmesser gleich dem Außendurchmesser des Rohrs 10 ist und einen vorderen Teil 18'' auf, dessen Durchmesser gleich dem Innendurchmesser des Rohrs 10 entspricht. Die beiden Teile sind durch eine Ringschulter 20 voneinander getrennt, an der das Ende des Rohrs 10 anliegt.

Das Rohr 10 ist auf diese Weise im Bereich des Rohrstücks 14 innen durch den Teil 18'' des Dorns 18 und außen durch die zweite Haltevorrichtung 16 gehalten. Die zweite Haltevorrichtung 16 ist in einer dritten Haltevorrichtung 22 verschiebbar gelagert.

Zwischen der ersten Haltevorrichtung 12 und der zweiten Haltevorrichtung 16 ist ein Hohlraum 24 ausgespart, dessen lange 1 ungefähr doppelt so groß ist wie die Höhe h (Figur 3) eines herzustellenden Rohrbundes 26.

In der dritten Haltevorrichtung 22 sind Formbacken 28 eingepaßt, die radial auf das Rohr 10 schiebbar sind.

Der schlanke vordere Teil 18'' des Dornes 18 ist in seiner lange so bemessen, daß er vom Ende des Rohres 10 bis zur ersten Haltevorrichtung 12 reicht und in dieser noch "gelagert" ist.

Zum Herstellen eines oder mehrerer Rohrbunde 26 wird das Rohr 10 durch die erste Haltevorrichtung 12 geführt bis zur Ringschulter 20 des Dornes 18 oder in die geteilte Haltevorrichtung 12 eingelegt und von der ersten Haltevorrichtung 12 festgespannt. Die zweite Haltevorrichtung 16 bewegt sich dann mitsamt dem Dorn 18 auf die erste Haltevorrichtung 12 zu. Dabei wird die Rohrwandung des Rohres 10 im Bereich des Hohlraums 24 gestaucht und aufgrund des von innen anliegenden Dornbereichs 18'' in den Hohlraum 24 ausgebaucht. Die Bewegung der zweiten Haltevorrichtung 16 und des Dornes 18 wird so lange fortgeführt, bis die aufgebauchten Rohrwandungsbereiche 30 aneinander zur Anlage gelangen.

Die zweite Haltevorrichtung 16 weist hierzu vorteilhaft eine Auskerbung 32 auf, in denen die fertiggestellten Rohrbunde 26 passend eingedrückt sind.

Nach Fertigstellung dieses ersten Rohrbundes 26 bewegt sich die zweite Haltevorrichtung 16 und der Dorn 18 wieder zurück und ein oder mehrere Formbacken 28 werden durch die dritte Haltevorrichtung 22 auf das Rohr 10 gedruckt. Die Formbacken 28 weisen ebenfalls Auskerbungen 32 in der Form der Rohrbunde auf und umgreifen diese passend. Die Breite der Formbacken ist entsprechend dem Abstand der herzustellenden Rohrbunde bemessen.

Die zweite Haltevorrichtung 16 und der Dorn 18 werden so weit zurückbewegt, daß wieder ein Hohlraum 34 entsteht, dessen lange 1 ungefähr der doppelten Höhe h des herzustellenden Rohrbundes 26 entspricht.

Der zweite und jeder weitere Rohrbund wird analog zum ersten hergestellt. Die Abstände der Rohrbunde 26 untereinander werden durch die Breite der einzelnen Formbacken 28 bestimmt, die Höhe eines Rohrbundes durch die lange 1 des erzeugten Hohlraums 24, 34 u.s.w.. Um unterschiedlich hohe Rohrbunde 26 herzustellen, muß die Auskerbung 32 mindestens die Höhe des größten Rohrbundes 26 aufweisen.

Es ist natürlich auch möglich, bauchige Rohrbunde 26 herzustellen, bei denen die Rohrbereiche 30 nicht aufeinander zur Anlage gelangen. Dazu muß lediglich die Bewegung der zweiten Haltevorrichtung 16 entsprechend vorzeitig unterbrochen werden.

Das insbesondere durch das vorher beschriebene Verfahren hergestellte Rohr 10 weist Rohrbunde 26 auf, die durch gestauchte, aneinander anliegende Wandungsbereiche 30 gebildet sind. Die Anzahl, die Größe und der Abstand der Rohrbunde ist in weiten Grenzen variabel. Vorzugsweise weist das Rohr 10 drei Rohrbunde 26 auf, wobei zwischen zwei benachbarten Rohrbunden eine Dichtung in Form eines O-Rings 26 nachträglich oder bereits während der Fertigung eingelegt ist und zumindest ein weiterer Rohrbund 26 zur Sicherung der Rohrverbindung Verwendung findet, beispielsweise durch einen Splint, eine Klammer oder einen Hakenspringring.

Obwohl zur Aufnahme einer Dichtung, beispielsweise einer O-Ringdichtung 36 nur zwei Rohrbunde 26 benötigt werden, ist, wie in

Figur 3 links zu sehen, ein dritter Rohrbund 26 angeformt. Dieser Rohrbund 26 wird als erster gefertigt, so daß die Lage dieses Rohrbundes 26 aufgrund während des Stauchprozesses auftretenden Schlupfes einer größeren Toleranz unterliegt. Ausgehend von diesem Rohrbund 26, der als formstabile Anlageschulter während der Stauchprozesse der weiteren Rohrbunde dient, können engere Toleranzen eingehalten werden, so daß ausgehend von diesem ersten Rohrbund 26 die Lage des O-Rings 36 in engen festlegbar ist. Bei der späteren Rohrverbindung kann dieser erste Rohrbund 26 vorteilhaft dazu verwendet werden, die Lage des O-Rings 36 innerhalb der Rohrverbindung genau festzulegen und somit hohe Dichtigkeit zu gewährleisten.

In den Figuren 4 bis 6 ist die Herstellung eines ein weiteres Rohr, beispielsweise der Form des Rohres 10, aufnehmendes Rohr 40 dargestellt, wobei das Rohr 40 in einer Spannvorrichtung 42 mit einer profilierten Innenseite 44 eingespannt ist und durch Einpressen eines Dornes 46 mit der gleichen Profilierung aufgeweitet und bereichsweise gestaucht wird, so daß sich das Profil dem Rohr 40 aufprägt. Beim Einpressen des Dornes 46 wird insbesondere in den Übergangszonen 47, in denen sich der Durchmesser des Rohres 40 ändert, Material durch Reibschluß zugeschoben, so daß eine erhebliche Aufweitung auf größere Durchmesser möglich ist.

In einem zweiten Schritt (Figur 5) wird mittels einer Verschiebeeinrichtung 48, die sich auf dem aus dem Rohr 40 herausragenden hinteren Schaftende 50 des Dornes 46 bewegen läßt, ein Rohrbund 52 angeformt.

Dabei ist an der Verschiebeeinrichtung 48 sowohl ein Hohlraum 54 im Bereich des späteren Rohrbundes 52 als auch eine Anlageschulter 56 ausgebildet. Die Anlageschulter 56 entspricht der Ringschulter 20 und übernimmt deren Funktion.

Der derart angeformte Rohrbund 52 dient der Versteifung des aufgeweiteten Bereiches des Rohres 40 und kann ferner zu späteren Sicherungszwecken bei der Rohrverbindung Verwendung finden.

Durch einen weiteren Dorn 58 wird, nach dem die Verschiebeeinrichtung 48 und der Dorn 46 entfernt wurden, an das Rohrende des Rohres 40 eine Schräge 60 angeformt. Hierzu weist der Dorn 58 einen zylindrischen, in den aufgeweiteten Bereich des Rohres 40 passenden Schaftteil 62 und einen daran anschließenden konischen Schaftteil 64 auf.

Durch die Schräge 60 wird bei der späteren Montage das Einführen beispielsweise des Rohres 10 erleichtert.

In Figur 7 ist eine Rohrverbindung 70 dargestellt mit einem ersten Rohr 10 und einem das erste Rohr 10 umgreifenden Rohr 40, einer O-Ringdichtung 36 und einer Halteklammer 72.

Das Rohr 40 weist einen ersten aufgeweiteten Bereich 74 auf, dessen Innendurchmesser gleich dem Außendurchmesser des Rohres 10 ist und der zur Führung und Stabilisierung dient. Ein weiterer, größer aufgeweiteter Bereich 76 nimmt die Rohrbunde 26 des ersten Rohres 10 auf und weist selbst einen Rohrbund 52 auf. Der Bereich 76 dient der Dichtung und der Sicherung.

Zur Sicherung ist über die Rohrverbindung 70 die Klammer 72 gesteckt, wobei sich vier fingerförmige Laschen 78 und 80 über die Rohrverbindung 70 erstrecken. Die Laschen 78 stützen sich am äußeren Rohrbund 26 des Rohres 10 und die Laschen 80 am Rohrbund 52 des Rohres 40 ab. Auf diese Weise ist ein ungewolltes Auseinanderziehen der Rohrverbindung 70 verhindert.

In Figur 8 ist eine Rohrverbindung 82 gezeigt mit einem ersten Rohr 10 und einem zweiten Rohr 84. Dieses Rohr 84 entspricht im wesentlichen dem Rohr 40 und weist einen ersten Aufweitungsbereich 86 und einen zweiten Aufweitungsbereich 88 auf, der jedoch kürzer gehalten ist als der entsprechende zweite Aufweitungsbereich 76 des Rohres 40. Dadurch entsteht eine Lücke zwischen der Schräge 90 und dem in Figur 8 linken Rohrbund 26, in die beispielsweise eine Wand 92 greift und die Rohrbindung in ihrer Lage fixiert. Diese Fixierung kann verbessert werden, wenn die Wand 92 einen Kragen 94 aufweist, der sich zwischen zwei Rohrbunde 26 einfügt. Die durch den Kragen geschaffene Öffnung kann beispielsweise schlüssellochförmig ausgestaltet sein, wobei die große Öffnung einen Durchmesser mindestens von der Größe des Durchmessers der Rohrbunde 26 aufweist, so daß diese durchgeschoben und in den schlankeren unteren Teil der schlüssellochförmigen Öffnung abgesenkt werden können.

Zur Sicherung der Rohrverbindung 82 findet ein Halteelement 96 Anwendung, das (Figur 10a) eine einseitig offene Öffnung 98 und mindestens zwei Durchbrüche 100 zur Aufnahme von Schrauben 102 aufweist. Auf diese Weise ist nicht nur der Zusammenhalt innerhalb der Rohrverbindung 82, sondern ebenfalls die Lage des Rohrs relativ zur Wand 92 gesichert.

In Figur 9 ist eine Rohrverbindung 104 zwischen einem Rohr 10 und einer massiven Wand 106 dargestellt. Das Rohr 10 ist in eine die Wand 106 durchdringende Öffnung 108 passend eingeführt, wobei die Öffnung 108 einen erweiterten Bereich 110 aufweist, dessen Innendurchmesser dem Außendurchmesser der Rohrbunde 26 und dessen Tiefe dem äußeren Abstand der beiden äußeren Rohrbunde 26 entspricht. Zur Dichtung ist zwischen zwei Rohrbunde 26 ein O-Ring 36 eingelegt, zur Sicherung dient ein Halteelement 96, das mit Schrauben 102 an der Wand 106 befestigt ist und am äußeren Rohrbund 26 angreift.

Eine weitere Rohrverbindung 112 zeigt Figur 10 mit einem Rohr 40, das einen erweiterten Bereich 114 aufweist und mit diesem über einen Flansch 116 geschoben ist. Als Dichtung dient ein in eine Aussparung des Flansches 116 eingelegter O-Ring 36 und zur Sicherung ein Halteelement 96, das mittels Schrauben 102 an der den Flansch aufweisenden Wand 118 befestigt ist.

Nachstehend sind zwei bevorzugte Ausführungsformen der in einer Vorrichtung zur Herstellung der Rohre für Rohrverbindungen eingesetzten Haltebacken beschrieben. Bei der Herstellung von Rohrbunden 26 oder Aufweitungen 74, 76 ist es nötig, mit der ersten Haltevorrichtung 12 das Rohr 10 beziehungsweise 40 verschiebesicher einzuspannen. Entsprechend Figur 11 weisen die Haltebacken 120 beziehungsweise 122 einseitig eine halbrunde, nach unten offene Öffnung 124 beziehungsweise 126 auf, in die ein Rohr 128 eingelegt und festgehalten werden kann.

Die Öffnungen 124 und 126 erstrecken sich entlang der Längsachse der Haltebacken 120 beziehungsweise 122 und weisen an ihrem Innenumfang ein zahnförmiges Profil 130 beziehungsweise 132 auf. Die Zahngründe 134 beziehungsweise 136 weisen einen Radius auf, der dem halben Außendurchmesser des Rohres 128 entspricht. Die Zähne 138 beziehungsweise 140 sind gegenüber den Zahngründen 134, 136 um einen kleinen Betrag "x" erhaben, das heißt der Innenradius der Zähne 138, 140 ist um "x" kleiner als der der Zahngründe 134, 136. Die sich dadurch ergebenden Zahnflanken 142 beziehungsweise 144 verlaufen entlang der Oberfläche der Aussparung 124, 126 beziehungsweise entlang dem äußeren Umfang des eingespannten Rohres 128.

Zum Einspannen des Rohres 128 wird dieses in die Öffnung 126 eingelegt, die zu diesem Zweck eine Schräge 146 aufweist. Dann wird der Haltebacken 120 mit seiner Öffnung 124 auf das Rohr 128 gepreßt, bis die Haltebacken 120 und 122 aufeinander aufliegen und die Zahngründe 134 und 136 am Rohraußendurchmesser anliegen. Die Zähne 138 und 140 prägen sich dabei in den Rohraußendurchmesser ein und verdrängen dessen Material. Dabei entstehen an den Zahnflanken 142 und 144 scharf begrenzte Absätze auf dem Rohraußendurchmesser, so daß ein formschlüssiger Halt zwischen den Haltebacken 120, 122 und dem Rohr 128 gewährleistet ist. Bei auftretender axialer Kraft 148 kann das Rohr 128 nicht mehr gegenüber den Backen 120, 122 axial verrutschen. Lediglich ein kleiner minimaler Schlupf, der material- und oberflächenabhängig ist und auch auf Toleranzen innerhalb des Werkzeuges zurückzuführen ist, tritt auf. Dieser Schlupf ist jedoch bestimmbar und konstant.

Um die Haltebacken 120 und 122 bei eingelegtem Rohr besser aufeinander aufpressen zu können, weist auch der Backen 120 eine Schräge 150 auf.

Die Materialverdrängung am Rohraußendurchmesser setzt sich fort bis in den Rohrinnendurchmesser, was zu einer leichten Verjüngung der lichten Weite des Rohres führen kann. Um diesen Effekt möglichst klein zu halten, sind die Zähne 138 des Backens 120 den Zahngründen 136 des Backens 122 gegenübergestellt und umgekehrt. Auf diese Weise wechselt sich eine Verjüngung auf einer Seite mit einer Verjüngung auf einer anderen Seite innerhalb des Rohres ab, wodurch die Verengung der lichten Weite des Rohres 128 auf ein tolerierbares Maß begrenzt ist.

Der Betrag "x" ist klein zu wählen, um eine möglichst kleine Beeinträchtigung der lichten Weite zu gewährleisten. Je mehr Zähne 138, 140 beziehungsweise Zahnflanken 142, 144 ausgebildet werden können, um so kleiner kann der Betrag "x" sein zur Erzielung der vollen Wirkung. Die Kraftübertragung verteilt sich dann auf viele kleine Flächen entsprechend der Anzahl der Zahnflanken. Vorteilhafterweise ist der Betrag "x" kleiner als die Wandstärke eines Rohres.

Um die Beeinträchtigung der lichten Weite des Rohres 128 weiter zu verringern, können entsprechend den Figuren 13 und 14 Freiräume 152 zwischen den Zähnen 154 so ausgebildet sein, daß der Radius der Zahngründe 156 erheblich größer ist als der halbe Rohraußendurchmesser. Ferner können die Zahngründe 156 entsprechend Figur 13 seitlich gänzlich ausgespart und die Zähne 154 so verlängert sein, daß sie beim Zusammenpressen der Haltebacken 158 kammartig ineinandergreifen.

Ein einzuspannendes Rohr wird auch hier in eine Aussparung 124 soweit möglich eingelegt, die Backen 158 aufeinandergepreßt und das Rohr 128 arretiert. Die Zähne 154, die wiederum einen Innenradius aufweisen, der um einen Betrag "x" kleiner ist als der Rohraußendurchmesser, prägen dabei ein zahnförmiges Profil auf den Außendurchmesser des Rohres 128, wodurch ein formschlüssiger Halteverbund an den Zahnflanken entsteht und bis auf einen kleinen Schlupf axiale Kräfte aufgenommen werden können.

Durch diese Anordnung wird die lichte Weite des Rohres 128 nicht beeinträchtigt, da sich einer durch Materialverdrängung gebildeten Einbuchtung im Rohrinnendurchmesser eine entsprechende Ausbuchtung auf der gegenüberliegenden Seite ausbildet.

Die beschriebenen Haltebacken müssen lediglich für jeden zu bearbeitenden Rohraußendurchmesser bereitgestellt werden und sind unabhängig vom weiteren Verlauf der Rohre 128. Die axiale Kraft wird dirkekt durch den Formschluß der Zahnflanken mit dem eingeprägten Profil aufgenommen und muß nicht durch einen Formschluß, der durch den weiteren Verlauf des Rohres vorgegeben ist, bewirkt werden.

## Patentansprüche

1. Verwendung einer Vorrichtung zum Halten von einem Rohr mit zwei aufeinander zubewegbaren Haltebacken (120, 122, 158), die Öffnungen bzw. Aussparungen (124, 126) mit einem zahnförmigen Profil (130) aufweisen, dergestalt, daß, die Zähne (138, 140, 154) gegenüber den Zahngründen (134, 136) um einen kleinen Betrag 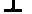 x*"* erhaben sind, wobei die sich dadurch ergebenden Zahnflanken (142, 144) entlang der Oberfläche der Aussparung (124, 126) in Umfangsrichtung erstrecken, gekennzeichnet durch die Verwendung zum Halten von Rohren bei axial auftretenden Kräften, wobei
die tieferliegende Zahngründe (134,136) des Profils (130) größer oder gleich den Rohraußendurchmesser sind und die Zähne (138,140,154) eine Öffnung (124,126) mit einem kleineren Innendurchmesser freilassen als der Rohraußendurchmesser.

2. Verwendung der Vorrichtung nach Anspruch 1, beim Anformen von Rohrbunden.

3. Verwendung der Vorrichtung nach Anspruch 1 beim Aufweiten von Rohren.

## Claims

1. Use of a device for holding a pipe, having two holding jaws (120, 122, 158), which are movable towards one another and have openings or recesses (124, 126) having a tooth-shaped profile (130) in such a way that the teeth (138, 140, 154) are raised by a small amount "x" relative to the tooth roots (134, 136), the tooth flanks (142, 144) obtained as a result extending in the circumferential direction along the surface of the recess (124, 126), characterized by the use for holding pipes when axial forces occur, the deeper-set tooth roots (134, 136) of the profile (130) being larger than or equal to the pipe outside diameter, and the teeth (138, 140, 154) leaving an opening (124, 126) having a smaller inside diameter than the pipe outside diameter.

2. Use of the device according to Claim 1 during the integral forming of pipe collars.

3. Use of the device according to Claim 1 during the widening of pipes.

## Revendications

1. Application d'un dispositif pour accrocher un tuyau à l'aide de deux mors de retenue mobiles l'un par rapport à l'autre (120, 122, 158), ayant des ouvertures ou des cavités (124, 126) correspondant à un profil denté (130) ; les dents (138, 140, 154) sont relevées d'une faible longueur 〈〈 x 〉〉 par rapport aux fonds de dents (134, 136), et les flancs de dents (142, 144) qui en résultent s'étendent le long de la surface de la cavité (124, 126), dans la direction périphérique,
caractérisée en ce que
l'application pour la fixation de tuyaux soumis à des efforts axiaux, et les fonds de dents les plus profonds (134, 136) du profil (130) sont supérieurs ou égaux au diamètre extérieur du tuyau et les dents (138, 140, 154) laissent libre une ouverture (124, 128) de diamètre plus petit que le diamètre intérieur du tuyau extérieur.

2. Application du dispositif selon la revendication 1, pour la mise en forme de collets de tuyau.

3. Application du dispositif selon la revendication 1, dans lequel on élargit les tuyaux.
